# EUROPÄISCHE PATENTANMELDUNG

(11) **EP 1 069 001 A1**
(43) Veröffentlichungstag der Anmeldung: **17.01.2001**
(21) Anmeldenummer: 00110570.9
(22) Anmeldetag: 18.05.2000
(51) Int. Cl.: B60R 21/01

(54) **Vorrichtung zur Steuerung eines Sicherheitsystems**

(30) Priorität: 12.07.1999 DE 19932520
(71) Anmelder: Hirschmann Austria GmbH, 6830 Rankweil-Brederis (AT); Gantner Electronic GmbH, 6780 Schruns (AT)
(72) Erfinder: Gantner, Reinhold, 6700 Bludenz (AT); Fabing, Helmut, 6811 Göfis (AT)
(74) Vertreter: Stadler, Heinz, Dipl.-Ing.

(57) **Zusammenfassung**

Die Erfindung betrifft eine Vorrichtung (1) zur Steuerung wenigstens eines Sicherheitssystems in einem Kraftfahrzeug in Abhängigkeit von Ausgangssignalen von Sensoren zur Erfassung der Position von Objekten und/oder Personen (5) auf einen Sitz (4) des Kraftfahrzeugs. Als Sensoren sind wenigstens zwei auf einen Sitz (4) gerichtete Kameras (2) vorgesehen, wobei in einer Auswerteeinheit (12) aus den in den Kameras (2) registrierten zweidimensionalen Bildern eine dreidimensionale Abbildung der Objekte und/oder Personen (5) gewonnen wird, aus welcher die Ausgangssignale abgeleitet sind.

## Beschreibung

Die Erfindung betrifft eine Vorrichtung gemäß dem Oberbegriff des Anspruchs 1.

Eine derartige Vorrichtung ist aus der WO 94/22693 bekannt. Diese Vorrichtung umfaßt einen Sensor zur Erkennung der Position einer Person auf dem Sitz eines Kraftfahrzeugs. Das Ausgangssignal des Sensors wird zur Beeinflussung eines passiven Sicherheitssystems verwendet, wobei das Sicherheitssystem insbesondere von einem dem Sitz zugeordneten Airbag gebildet ist.

Der Airbag ist durch einen Beschleunigungssensor, ein Feder-Masse-System oder eine ähnliche Sensorik, die bei einem Unfall des Kraftfahrzeugs anspricht, auslösbar.

Dabei besteht das Problem, daß insbesondere dann, wenn sich eine Person weit vorgeneigt im Sitz befindet, ein Auslösen des Airbags zu Verletzungen oder sogar zum Tode der Person führen kann.

Um eine derartige Gefährdung von Insassen des Kraftfahrzeugs zu verringern, wird eine kritische Annäherung der Person an den Airbag mittels des Sensors zur Positionserfassung registriert, worauf der Airbag vorzugsweise deaktiviert wird. Hierzu wird der Sensor zur Erfassung der Position der Person so angeordnet, daß möglichst genau der Abstand des Kopfes oder der Brust zum Airbag bestimmbar ist.

Dieser Sensor kann insbesondere als Abstandssensor ausgebildet sein. Dabei sind als mögliche Abstandssensoren neben Ultraschallsensoren auch optische Sensoren geeignet.

Als optische Sensoren werden insbesondere eine auf die Oberseite der Person gerichtete Lichtquelle sowie zwei Empfänger in Form von CCD-Zeilen verwendet.

Mittels dieses Sensors kann zudem eine grobe Mustererkennung durchgeführt werden, mit welcher eine Person von einem anderen Objekt, beispielsweise einer Tasche, unterscheidbar ist.

Zudem ist als mögliche Alternative die Verwendung eines Kamerasystems zur Bestimmung der Position der Person relativ zum Airbag vorgesehen.

Mit dieser Vorrichtung kann die Annäherung einer Person an den Airbag erfaßt werden, um in Abhängigkeit dann die Auslösung des Airbags zu unterbinden oder zeitlich zu verzögern.

Dies führt zu einer beträchtlichen Minimierung des Verletzungsrisikos von Insassen des Kraftfahrzeugs, jedoch wird auch mit dieser Vorrichtung nur ein unvollständiger Schutz der Insassen im Kraftfahrzeug gewährleistet.

Insbesondere ist dabei nachteilig, daß mit dem Sensor zur Positionserfassung der Person nur deren Annäherung zum Airbag erkannt wird, nicht jedoch deren individuelle Eigenschaften erfaßt werden, wie beispielsweise die Körpergröße der Person, deren Sitzhöhe sowie deren Kopfposition und Kopfgröße.

Dadurch ergibt sich beispielsweise, daß der Airbag stets in gleicher Weise aktiviert wird, unabhängig davon, ob sich ein großgewachsener, korpulenter Mann im Sitz eines Kraftfahrzeugs befindet oder ein Kind mit entsprechend geringem Gewicht und geringer Körpergröße.

So kann beispielsweise für eine große Person trotz Annäherung an den Airbag dessen plötzliches Auslösen noch unschädlich sein, während derselbe Auslöseprozeß bei einem Kind zu erheblichen Verletzungen führen kann.

Aus der Veröffentlichung 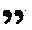 airbag 2000", 3^{rd} International Symposium of Sophisticated Car Occupant Systems des Fraunhofer Instituts Chemische Technologie, 26./27. November 1996 ist bekannt, Kamerasysteme zur flächenhaften Überwachung von Sitzen in Kraftfahrzeugen einzusetzen. Auch diese Kamerasysteme werden lediglich dazu verwendet, die Annäherung einer Person an den Airbag zu erfassen.

Aus der DE 44 00 664 C2 ist eine Vorrichtung zur Sitzbelegung in Fahrzeugen bekannt, welche eine Anzahl von auf den Sitz gerichteten Lichtemittern aufweist, um die Kontur des Sitzes in Form von Leuchtflecken zu erfassen. In einer definierten Entfernung zum Sitz ist ein Photodetektoren-Feld angeordnet, auf das die Leuchtflecke abgebildet werden. Auch mit dieser Vorrichtung läßt sich lediglich erkennen, ob ein Sitz mit einer Person belegt ist und ob sich deren Position zum Armaturenbrett hin verändert.

Der Erfindung liegt die Aufgabe zugrunde, eine Vorrichtung der eingangs genannten Art so auszubilden, daß ein Sicherheitssystem zum Schutz einer Person individuell auf diese Person abgestimmt steuerbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung weist als Sensoren wenigstens zwei auf einen Sitz eines Kraftfahrzeugs gerichtete Kameras auf. In einer Auswerteeinheit wird aus den in den Kameras registrierten zweidimensionalen Bildern eine dreidimensionale Abbildung von einem Objekt oder einer Person auf dem Sitz gewonnen. Aus dieser Abbildung werden die Ausgangssignale zur Steuerung des Sicherheitssystems abgeleitet.

Dabei besteht das Sicherheitssystem insbesondere aus einem dem Sitz zugeordneten Airbag.

Der Grundgedanke der Erfindung besteht darin, daß die Auslösung des Sicherheitssystems, insbesondere des Airbags, in Abhängigkeit von der dreidimensionalen Abbildung einer Person oder eines Objekts auf dem zugeordneten Sitz erfolgt. Aus dieser Abbildung ergibt sich nicht nur die Entfernung einer Person zu einem Airbag. Vielmehr gibt die dreidimensionale Abbildung einer Person auch Aufschluß über deren individuelle Eigenschaften. Hierzu gehören insbesondere die Größe der Person sowie die Größe und Lage des Kopfes relativ zur Rücklehne des Sitzes.

In Abhängigkeit von diesen Daten kann die Person klassifiziert werden. Insbesondere lassen sich genaue Aussagen über die Größe der Person ableiten. Zudem ist die Position der Person nicht nur relativ zum Airbag feststellbar, auch die Sitzhaltung der Person im Sitz kann anhand der dreidimensionalen Abbildung festgestellt werden. Schließlich kann auch erfaßt werden, ob eine Person mit einem Sicherheitsgurt angeschnallt ist oder nicht.

Diese Kenngrößen bilden Ausgangssignale zur Steuerung des Airbags. Anhand dieser Ausgangssignale ist dabei die Deaktivierung und Aktivierung des Airbags individuell auf die Person abstimmbar, wodurch eine Gefährdung der Person bei Aktivierung weitestgehend ausgeschlossen ist.

Insbesondere ist der zeitliche Verlauf des Aufblasens des Airbags an die Größe einer Person individuell anpaßbar. So wird der Airbag vorzugsweise sehr schnell aufgeblasen, falls sich eine entsprechend große Person auf dem Sitz befindet. Demgegenüber erfolgt die Aktivierung des Airbags langsamer, falls sich eine kleine Person, insbesondere ein Kind, auf dem Sitz des Fahrzeugs befindet.

Zudem ist der zeitliche Verlauf des Aufblasens des Airbags auch davon abhängig, ob eine Person im Sitz des Kraftfahrzeugs mit einem Sicherheitsgurt angeschnallt ist oder nicht. Bei angeschnallten Personen wird der Airbag bereits bei geringeren Beschleunigungen des Fahrzeugs ausgelöst, während bei angeschnallten Personen die Aktivierung des Airbags erst bei größeren Beschleunigungen erfolgt.

Schließlich kann mit den Kameras auch unterschieden werden, ob sich ein Objekt, beispielsweise ein Kindersitz, auf dem Sitz des Kraftfahrzeugs befindet. In diesem Fall wird der Airbag vorzugsweise deaktiviert.

Gemäß der in den Ansprüchen 8 bis 14 beschriebenen Auswertung der von den Kameras erfaßten Bilder wird eine dreidimensionale Abbildung in Form eines Höhenprofils durch einen Ähnlichkeitsvergleich der beiden Bilder gewonnen. Diese Art der Auswertung entspricht der Funktionsweise der Bilderfassung beim menschlichen Auge. Dabei ist besonders vorteilhaft, daß die Erzeugung der dreidimensionalen Abbildung mit einem Minimum an Rechenzeit erfolgt. Dadurch ist gewährleistet, daß die Reaktionszeit der verwendeten Sensorik bei der Bilderfassung den Aktivierungsprozeß des Sicherheitssystems nicht verzögert.

Die Erfindung ist nicht auf die Steuerung eines Airbags beschränkt. Anhand der Ausgangssignale können auch weitere Sicherheitssysteme, wie zum Beispiel Gurtstraffer oder eine Abschaltvorrichtung zur Abschaltung der Batterie des Kraftfahrzeugs gesteuert werden.

Die Erfindung wird nachstehend anhand der Zeichnungen erläutert. Es zeigen:
- Fig. 1 -: ein Blockschaltbild einer Vorrichtung zur Steuerung eines Sicherheitssystems in einem Kraftfahrzeug in Abhängigkeit von den Ausgangssignalen von Sensoren.
- Fig. 2 -: eine Anordnung der Sensoren gemäß Figur 1 zur Erfassung einer Person auf einem Sitz eines Kraftfahrzeugs.

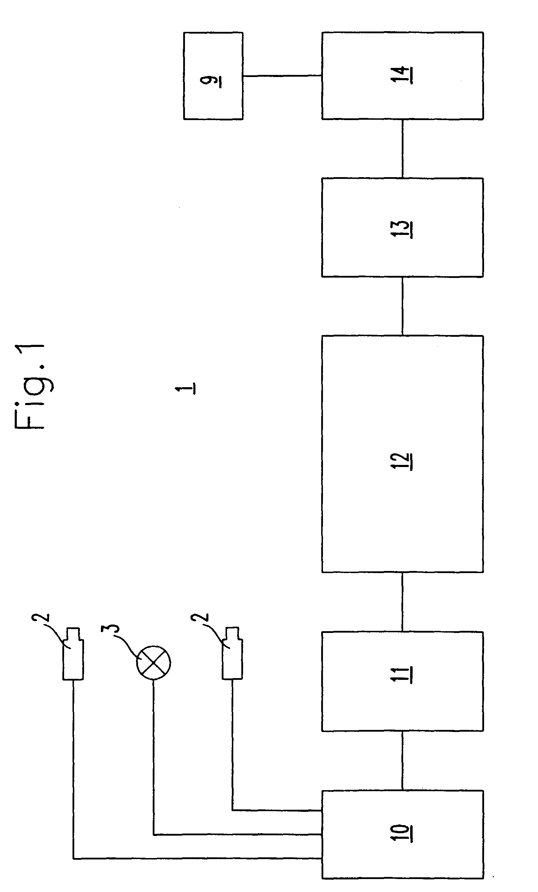

Figur 1 zeigt ein Ausführungsbeispiel einer Vorrichtung 1 zur Steuerung eines Sicherheitssystems in einem Kraftfahrzeug. Das Sicherheitssystem kann von einem Airbag oder mehreren Airbags gebildet sein. Zudem kann als Sicherheitssystem ein Gurtstraffer vorgesehen sein. Schließlich kann das Sicherheitssystem von einer Abschaltvorrichtung für die Batterie eines Kraftfahrzeugs gebildet sein, welches zur Abschaltung des Kraftfahrzeugs in einem Notfall dient.

Die Steuerung des Sicherheitssystems erfolgt in Abhängigkeit von Ausgangssignalen von Sensoren. Im vorliegenden Ausführungsbeispiel sind die Sensoren von zwei Kameras 2 gebildet, welchen eine Beleuchtung 3 zugeordnet ist. Wie aus Figur 1 ersichtlich, sind die Kameras 2 in Abstand nebeneinander liegend angeordnet, wobei die Beleuchtung 3 zwischen den Kameras 2 vorgesehen ist.

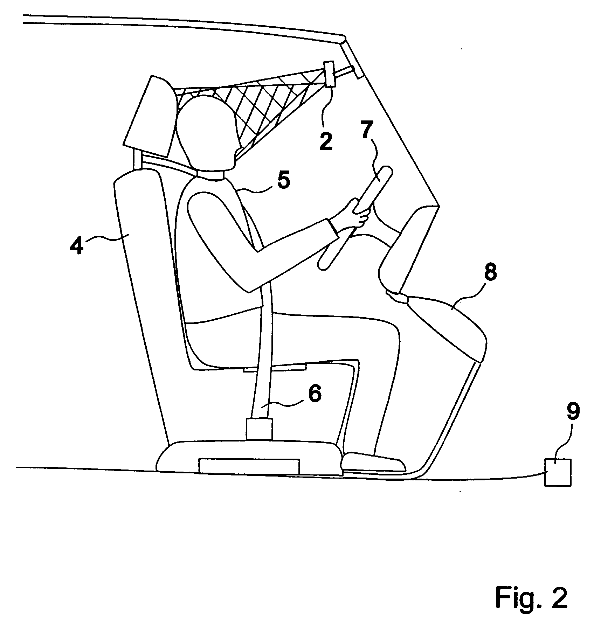

Mit dieser Sensoranordnung wird, wie in Figur 2 dargestellt, ein Sitz 4 eines Kraftfahrzeugs sowie eine Person 5 oder ein Objekt auf dem Sitz 4 erfaßt. Die Sensoranordnung ist an der Oberseite der Windschutzscheibe so montiert, daß der obere Teil des Sitzes 4 sowie der Kopf der Person 5 erfaßbar ist. Prinzipiell kann die Sensoranordnung auch an der Decke des Kraftfahrzeugs so montiert sein, daß auch der nach unten anschließende Teil des Sitzes 4 sowie der Brustbereich der Person 5 erfaßbar ist. Dabei wird besonders vorteilhaft auch der Sicherheitsgurt 6 einer am Sitz 4 angeschnallten Person 5 erfaßt.

Das Sicherheitssystem besteht in diesem Ausführungsbeispiel aus einem nicht dargestellten Airbag, der beispielsweise im Lenkrad 7 des Kraftfahrzeugs untergebracht ist. Der Airbag ist bei dessen Aktivierung über zwei Kammern 8 aufblasbar, die unterhalb des Lenkrads angeordnet sind. Eine dieser Kammern 8 ist schematisch in Figur 2 dargestellt. Zur Aktivierung des Airbags ist ein Beschleunigungssensor 9 vorgesehen, welcher bei einem Unfall auftretende kritische Beschleunigungen des Kraftfahrzeugs erfaßt. Alternativ kann auch ein Feder-Masse-System oder dergleichen zur Erfassung von Verformungen des Kraftfahrzeugs bei einem Unfall vorgesehen sein.

Zudem kann das Sicherheitssystem weitere Airbags, wie zum Beispiel Kopf- und Seitenairbags, erfassen.

Die Kameras 2 sind vorzugsweise als Schwarz-Weiß-Kameras ausgebildet und weisen jeweils ein matrixförmiges CCD-Element mit n x m Pixeln zur Aufnahme eines zweidimensionalen Bildes in Form von den Pixeln zugeordneten Grauwerten auf.

Die zwischen den Kameras 2 angeordnete Beleuchtung 3 emittiert Lichtblitze im Infrarotbereich. Die Emission von Licht im Infrarotbereich vermeidet Störungen und Beeinträchtigungen der Personen 5 im Kraftfahrzeug. Die Lichtblitze werden synchron zum Takt der Bildaufnahme der Kameras 2 ausgesendet, wodurch der Energieaufwand und die Belastung der Beleuchtung 3 gering gehalten werden. Zudem wird durch die geringe Belichtungszeit die Bewegungsunschärfe bei Bewegungen der erfaßten Personen 5 gering gehalten.

Die Kameras 2 und die Beleuchtung 3 sind an eine Kamera-Schnittstelleneinheit 10 angeschlossen, deren Ausgang an einen Bildspeicher 11 angeschlossen ist. Die Ausgangssignale des Bildspeichers 11 werden in eine Auswerteeinheit 12 eingelesen, die vorzugsweise von einem Mikroprozessorsystem mit einer Bildverarbeitungssoftware gebildet ist. Vorteilhafterweise ist der Bildspeicher 11 in der Auswerteeinheit 12 integriert. Über wenigstens einen Ausgang der Auswerteeinheit 12 werden die dort generierten Ausgangssignale über eine Schnittstelleneinheit 13 in ein Steuergerät 14 eingelesen, welches das Sicherheitssystem aktiviert. An dieses Steuergerät 14 ist auch der Beschleunigungssensor 9 angeschlossen.

Die Bilder der Kameras 2 werden synchron über die Kamera-Schnittstelleneinheit 10 in den Bildspeicher 11 eingelesen. Hierzu ist in der Kamera-Schnittstelleneinheit 10 ein nicht dargestellter Multiplexer vorgesehen. Über den Multiplexer wird abwechselnd jeweils eine Zeile eines CCD-Elements einer Kamera 2 in den Bildspeicher 11 eingelesen.

Aus den im Bildspeicher 11 abgespeicherten Bildern der beiden Kameras 2 wird in der Auswerteeinheit 12 eine dreidimensionale Abbildung des Oberteils des Sitzes 4 sowie gegebenenfalls einer Person 5 oder eines Objekts auf dem Sitz 4 gewonnen.

Hierzu werden in einem ersten Schritt die beiden Bilder im Bildspeicher 11 auf dieselbe Helligkeit nominiert. Hierzu wird bei beiden Bildern durch Mittelwertbildung über die Grauwertverteilungen eine Durchschnittshelligkeit eines Bildes bestimmt. Anschließend werden die so ermittelten Helligkeiten auf einen gleichen Wert angepaßt.

Anschließend wird anhand dieser Bilder eine dreidimensionale Abbildung anhand eines Ähnlichkeitsvergleichs gewonnen. Hierzu werden in der Auswerteeinheit 12 beide Bilder nacheinander in einzelne Bildausschnitte unterteilt. Dann wird überprüft, ob zwischen zwei Bildausschnitten der beiden Bilder eine Übereinstimmung herrscht.

Zweckmäßigerweise erfolgt dieser Ähnlichkeitsvergleich in zwei Stufen. Zunächst werden die Bilder in relativ große Bildausschnitte unterteilt, wobei die Schrittweite der einzelnen Bildausschnitte ebenfalls relativ groß gewählt wird. Zwei derartige Bildausschnitte werden dahin überprüft, ob ein erster geringer Übereinstimmungsgrad vorliegt. Der Übereinstimmungsgrad ist zweckmäßigerweise durch die Wahl wenigstens eines Schwellwerts definiert, mit welchem die Differenzen der Grauwerte der beiden Bildausschnitte verglichen werden.

Wird anhand dieses ersten Ähnlichkeitsvergleichs eine erste grobe Übereinstimmung festgestellt, so wird mittels wenigstens eines zweiten Schwellwerts anschließend geprüft, ob ein entsprechend höherer Übereinstimmungsgrad der Bildausschnitte festgestellt wird. Dabei können bei dem zweiten Ähnlichkeitsvergleich dieselben Bildausschnitte oder Teile hiervon verwendet werden.

Für die übereinstimmenden Bildausschnitte in den beiden Bildern wird dann deren Versatz ermittelt. Die Größe des Versatzes ist umgekehrt proportional zur Entfernung des in den Bildern erfaßten Objekts zu den Kameras 2.

Schließlich werden die jeweils übereinstimmenden Bildausschnitte zur Gewinnung der dreidimensionalen Abbildungen übereinander gelegt, wobei die dreidimensionale Abbildung des erfaßten Objekts durch Auswertung der Distanzinformation in Form eines Höhenprofils erhalten wird.

Im Idealfall erfolgt der Ähnlichkeitsvergleich von Bildausschnitten der einzelnen Bilder, bis jeweils für die gesamten Bilder Paare von übereinstimmenden Bildausschnitten ermittelt wurden.

Ist aufgrund eines mangelhaften Kontrastes oder aufgrund von Störeinflüssen für einzelne Bildausschnitte der Bilder keine hinreichende Übereinstimmung feststellbar, so werden für diese Bildausschnitte die Höhenlinien dadurch festgelegt, daß zwischen den Werten der umliegenden Bildausschnitte, für welche eine hinreichende Übereinstimmung festgestellt wurde, interpoliert wird. Für den Fall, daß auch eine Interpolation nicht sinnvoll durchführbar ist, werden die Entfernungswerte der betroffenen Bildausschnitte jeweils auf den Wert "Unendlich" gesetzt.

In einer besonders vorteilhaften Ausführungsform der Erfindung werden Bildausschnitte von Objekten und/oder Personen 5, die Entfernungswerte liefern, welche entweder oberhalb eines oberen Grenzwertes liegen oder welche unterhalb eines unteren Grenzwertes liegen, verworfen und bei der Bildauswertung nicht berücksichtigt.

Somit werden nur Bildinformationen von Objekten und/oder Personen 5 ausgewertet, welche innerhalb eines durch die Grenzwerte vorgebbaren Abstandsbereichs zu den Kameras 2 liegen. Dadurch wird eine erhebliche Datenreduktion erzielt, was die Rechenzeit in der Auswerteeinheit 12 zur Generierung der dreidimensionalen Abbildung erheblich verkürzt.

In einer besonders vorteilhaften Ausführungsform wird der Einbauort eines Airbags, der sich beispielsweise im Lenkrad 7 des Kraftfahrzeugs befindet, von den Kameras 2 mit erfaßt. Dann kann aus der zweidimensionalen Abbildung der Abstand einer Person 5 zum Einbauort fortlaufend erfaßt werden, insbesondere auch dann, wenn sich die Lage der Person 5 und/oder des Einbauorts, beispielsweise während eines Unfalls, ändert.

Befindet sich der Einbauort nicht im Blickfeld der Kameras 2, so kann dennoch der Abstand einer Person 5 zu einem Einbauort errechnet werden, wobei jedoch der Einbauort als Parameterwert fest vorgegeben ist.

Aus der so gewonnenen dreidimensionalen Abbildung werden in der Auswerteeinheit 12 Ausgangssignale abgeleitet, welche über die Schnittstelleneinheit 13 in das Steuergerät 14 zur Steuerung des Airbags eingelesen werden.

Als erstes Ausgangssignal wird aus der dreidimensionalen Abbildung die Belegung des Sitzes 4 gewonnen. Ist der Sitz 4 unbelegt oder mit einem Objekt, beispielsweise einem Kindersitz, belegt, so ist anhand des ersten Ausgangssignals die Auslösung des Airbags deaktiviert, so daß dieser auch dann nicht ausgelöst wird, wenn der Beschleunigungssensor 9 eine kritische Beschleunigung aufgrund eines Unfalls registriert. Dadurch wird im Fall eines unbelegten Sitzes 4 eine unnötige Auslösung des Airbags vermieden, wodurch Kosten für die erneute Installation des Airbags in seine Lagerposition vermieden werden. Im Falle der Belegung des Sitzes 4 mit einem Kindersitz wird der Airbag aufgrund der Verletzungsgefahr eines im Kindersitz befindlichen Kindes deaktiviert.

Falls der Sitz mit einer Person 5 belegt ist, wird über das erste Ausgangssignal der Airbag aktiviert.

Dabei wird der zeitliche Verlauf des Aufblasens des Airbags über ein zweites, drittes und viertes Ausgangssignal gesteuert, welche ebenfalls aus der dreidimensionalen Abbildung abgeleitet werden.

Anhand der dreidimensionalen Abbildung wird insbesondere eine Klassifizierung einer Person 5 im Sitz 4 des Kraftfahrzeugs abgeleitet. Hierzu wird aus der dreidimensionalen Abbildung die Größe einer Person 5, insbesondere die Größe des Kopfes der Person 5, bestimmt. Zudem wird auch die Form des Kopfes ausgewertet. Daraus läßt sich beispielsweise ableiten, ob sich ein Erwachsener oder ein Kind auf dem Sitz 4 befindet. In Abhängigkeit dieser Informationen wird ein zweites Ausgangssignal generiert, welches den zeitlichen Verlauf des Aufblasen des Airbags steuert. Dabei erfolgt die Auslösung des Airbags um so schneller, je größer und schwergewichtiger eine Person 5 ist.

Schließlich wird aus der Lage des Kopfes einer Person 5 auch der Abstand des Kopfes zum Airbag und auch zur Lehne des Sitzes 4 bestimmt. Daraus wird als drittes Ausgangssignal abgeleitet, ob eine kritische Annäherung der Person 5 an den Airbag erfolgt ist. In diesem Fall erfolgt die Auslösung des Airbags zweckmäßigerweise über ein verlängertes Zeitintervall, um Verletzungen der Person 5 auszuschließen. Im Grenzfall wird der Airbag über das dritte Ausgangssignal vollständig deaktiviert.

Schließlich wird anhand der dreidimensionalen Abbildung als viertes Ausgangssignal ermittelt, ob eine Person 5 auf dem überwachten Sitz 4 mit einem Sicherheitsgurt 6 angeschnallt ist oder nicht. Zweckmäßigerweise befindet sich der Sicherheitsgurt 6 bei einer auf dem Sitz 4 angeschnallten Person 5 im Sichtfeld der Kameras 2. Vorteilhafterweise trägt der Sicherheitsgurt 6 in diesem Bereich eine nicht dargestellte Markierung, welche von den Kameras 2 erfaßt wird. Ist eine Person 5 nicht angeschnallt, so erfolgt die Aktivierung des Airbags bereits bei geringen vom Beschleunigungssensor 9 ermittelten Beschleunigungswerten, um so das Verletzungsrisiko für die Person 5 zu minimieren. Demgegenüber wird bei einer angeschnallten Person 5 der Airbag erst bei höheren Beschleunigungswerten ausgelöst.

Als weitere Anwendung kann der zeitliche Verlauf der dreidimensionalen Abbildung nicht flüchtig abgespeichert werden, um im Falle eines Unfalls Informationen über dessen Ablauf zu erhalten.

Schließlich können die dreidimensionalen Abbildungen auch zur Identifizierung von Personen 5 verwendet werden. Beispielsweise kann das Gesicht einer Person 5 als Kennung in der Auswerteeinheit 12 abgespeichert werden. Wird darauf beim Zugang einer Person 5 das Gesicht als übereinstimmend mit der Kennung erkannt, so können daraufhin beispielsweise Fahrzeugparameter über eine Steuereinheit automatisch eingestellt werden. Hierzu gehören beispielsweise an die Person 5 individuell angepaßte Einstellungen des Sitzes 4 oder von Innen- und Außenspiegeln des Kraftfahrzeugs.

## Patentansprüche

1. Vorrichtung zur Steuerung wenigstens eines Sicherheitssystems in einem Kraftfahrzeug in Abhängigkeit von Ausgangssignalen von Sensoren zur Erfassung der Position von Objekten und/oder Personen auf einem Sitz des Kraftfahrzeugs, **dadurch gekennzeichnet**, daß als Sensoren wenigstens zwei auf einen Sitz (4) gerichtete Kameras (2) vorgesehen sind, wobei in einer Auswerteeinheit (12) aus den in den Kameras (2) registrierten zweidimensionalen Bildern eine dreidimensionale Abbildung der Objekte und/oder Personen (5) gewonnen wird, aus welcher die Ausgangssignale abgeleitet sind.

2. Vorrichtung nach Anspruch 1, dadurch gekennzeichnet, daß das Sicherheitssystem von wenigstens einem Airbag gebildet ist.

3. Vorrichtung nach einem der Ansprüche 1 oder 2, dadurch gekennzeichnet, daß die Kameras (2) jeweils ein matrixförmiges CCD-Element mit n x m Pixeln zur Aufnahme eines zweidimensionalen Bildes in Form von den Pixeln zugeordneten Grauwerten aufweist.

4. Vorrichtung nach einem der Ansprüche 1 bis 3, dadurch gekennzeichnet, daß die Kameras (2) in vorgegebenem Abstand zueinander angeordnet und auf den O-berteil eines Sitzes (4) des Kraftfahrzeugs gerichtet sind.

5. Vorrichtung nach einem der Ansprüche 1 bis 4, dadurch gekennzeichnet, daß den Kameras (2) eine Infrarotlicht emittierende Beleuchtung (3) zugeordnet ist.

6. Vorrichtung nach Anspruch 5, dadurch gekennzeichnet, daß die Beleuchtung (3) zwischen den Kameras (2) angeordnet ist.

7. Vorrichtung nach einem der Ansprüche 5 oder 6, dadurch gekennzeichnet, daß die Beleuchtung (3) synchron zur Bildaufnahme der Kameras (2) Lichtblitze aussendet.

8. Vorrichtung nach einem der Ansprüche 3 bis 7, dadurch gekennzeichnet, daß die in den Kameras (2) ermittelten zweidimensionalen Bilder synchron in die Auswerteeinheit (12) einlesbar sind, und daß dort zur Ermittlung der dreidimensionalen Abbildung übereinstimmende Bildausschnitte in den eingelesenen Bildern bestimmbar sind und durch Übereinanderlegen der übereinstimmenden Bildausschnitte ein die dreidimensionale Abbildung bildendes Höhenprofil erzeugt wird, wobei der Versatz der übereinstimmenden Bildausschnitte der beiden Bilder ein Maß für die Distanz der abgebildeten Bestandteile des Objekts und/oder der Person (5) zu den Kameras (2) bildet.

9. Vorrichtung nach Anspruch 8, dadurch gekennzeichnet, daß aus den Kameras (2) abwechselnd jeweils eine Zeile von Pixeln des matrixförmigen CCD-Elements über einen in einer Kamera-Schnittstelleneinheit (10) integrierten Multiplexer in einen Bildspeicher (11) der Auswerteeinheit (12) einlesbar ist.

10. Vorrichtung nach einem der Ansprüche 8 bis 10, dadurch gekennzeichnet, daß die zweidimensionalen Bilder vor Erstellung der dreidimensionalen Abbildung in der Auswerteeinheit (12) auf dieselbe Helligkeit normiert werden.

11. Vorrichtung nach einem der Ansprüche 8 bis 10, dadurch gekennzeichnet, daß aus den zweidimensionalen Bildern jeweils nacheinander mit einer angegebenen Schrittweite jeweils ein erster Bildausschnitt in der Auswerteeinheit (12) herausgegriffen wird, daß innerhalb dieser Bildausschnitte die Grauwerte auf Vorliegen eines ersten, geringen Übereinstimmungsgrades verglichen werden, und daß anschließend die Grauwerte innerhalb dieser Bildausschnitte oder innerhalb Teilen hiervon auf Vorliegen eines zweiten, größeren Übereinstimmungsgrades verglichen werden.

12. Vorrichtung nach Anspruch 11, dadurch gekennzeichnet, daß zur Prüfung der Übereinstimmung zweier Bildbestandteile die Differenzen der Grauwerte der Pixel dieser Bildbestandteile mit wenigstens einem Schwellwert bewertet werden, wobei die Lage des Schwellwertes den Übereinstimmungsgrad definiert.

13. Vorrichtung nach einem der Ansprüche 8 bis 12, dadurch gekennzeichnet, daß bei Bildausschnitten der zweidimensionalen Bilder der Kameras (2), für welche keine Übereinstimmung feststellbar ist, zur Ermittlung der Höhenlinien zwischen den diese umgebenden übereinstimmenden Bildausschnitten eine Interpolation der Höhenlinien durchführbar ist, oder daß für diese Bildausschnitte jeweils als Entfernungswert der Wert "Unendlich" einsetzbar ist.

14. Vorrichtung nach einem der Ansprüche 8 bis 13, dadurch gekennzeichnet, daß Bildausschnitte von Objekten und/oder Personen (5), deren Abstand zu den Kameras (2) einen oberen Grenzwert überschreiten oder einen unteren Grenzwert unterschreiten, von der Erstellung des Höhenprofils ausgenommen sind.

15. Vorrichtung nach einem der Ansprüche 8 bis 14, dadurch gekennzeichnet, daß die Einbauposition eines dem Sitz (4) zugeordneten Airbags im Sichtfeld der Kameras (2) liegt, und daß aus der dreidimensionalen Abbildung die Entfernung einer Person (5) zum Einbauort des Airbags bestimmbar ist.

16. Vorrichtung nach einem der Ansprüche 1 bis 15, dadurch gekennzeichnet, daß die in der Auswerteeinheit (12) generierten Ausgangssignale über eine Schnittstelleneinheit (13) in ein Steuergerät (14) einlesbar sind.

17. Vorrichtung nach einem der Ansprüche 1 bis 16, dadurch gekennzeichnet, daß über die Auswerteeinheit (12) als Ausgangssignal der Sensoren die Belegung eines Sitzes (4) mit einer Person (5) oder einem Objekt ausgebbar ist.

18. Vorrichtung nach einem der Ansprüche 1 bis 17, dadurch gekennzeichnet, daß über die Auswerteeinheit (12) als Ausgangssignal die Größe und/oder Form eines Kopfes einer auf dem Sitz (4) befindlichen Person (5) ausgebbar ist.

19. Vorrichtung nach Anspruch 18, dadurch gekennzeichnet, daß über die Auswerteeinheit (12) als Ausgangssignal die Lage eines Kopfes einer Person (5) relativ zur Position der Lehne des Sitzes (4) ausgebbar ist.

20. Vorrichtung nach einem der Ansprüche 18 oder 19, dadurch gekennzeichnet, daß über die Auswerteeinheit (12) als Ausgangssignal die Distanz des Kopfes zu dem dem Sitz (4) zugeordneten Airbag ausgebbar ist.

21. Vorrichtung nach einem der Ansprüche 1 bis 20, dadurch gekennzeichnet, daß über die Auswerteeinheit (12) als Ausgangssignal der Sensoren ausgebbar ist, ob eine Person (5) mit einem Sicherheitsgurt (6) angeschnallt ist.

22. Vorrichtung nach Anspruch 21, dadurch gekennzeichnet, daß der Sicherheitsgurt (6) eine Markierung trägt, welche mittels der Kameras (2) erfaßbar ist.

23. Vorrichtung nach einem der Ansprüche 2 bis 22, dadurch gekennzeichnet, daß der einem Sitz (4) zugeordnete Airbag in Abhängigkeit von den Ausgangssignalen der diesem Sitz (4) zugeordneten Sensoren deaktivierbar ist.

24. Vorrichtung nach Anspruch 23, dadurch gekennzeichnet, daß der zeitliche Verlauf des Aufblasens des Airbags nach dessen Aktivierung in Abhängigkeit von den Ausgangssignalen der zugeordneten Sensoren steuerbar ist.

25. Vorrichtung nach einem der Ansprüche 16 bis 24, dadurch gekennzeichnet, daß der Airbag in Abhängigkeit der Ausgangssignale eines an das Steuergerät (14) angeschlossenen Beschleunigungssensors (9) aktivierbar ist, wobei der Airbag bei von einer von den Kameras (2) erfaßten nicht angeschnallten Person (5) im Vergleich zu einer angeschnallten Person (5) bei geringeren Beschleunigungswerten aktivierbar ist.

26. Vorrichtung nach einem der Ansprüche 1 bis 25, dadurch gekennzeichnet, daß der zeitliche Verlauf der registrierten dreidimensionalen Abbildungen nicht flüchtig zur Dokumentation des Ablaufs eines Unfalls abgespeichert ist.

27. Vorrichtung nach einem der Ansprüche 1 bis 26, dadurch gekennzeichnet, daß ein von den Kameras (2) erfaßtes Gesicht einer Person (5) in Form einer dreidimensionalen Abbildung als Kennung in der Auswerteeinheit (12) abgespeichert ist, und daß bei nachfolgender Registrierung eines mit der Kennung übereinstimmenden Gesichts Fahrzeugparameter des Kraftfahrzeugs, insbesondere die Einstellung des Sitzes (4) und/oder von Spiegeln am Kraftfahrzeug selbsttätig durchführbar ist.
